# EUROPÄISCHE PATENTSCHRIFT

(11) **EP 1 500 150 B1**
(45) Veröffentlichungstag und Bekanntmachung des Hinweises auf die Patenterteilung: **24.06.2009**
(21) Anmeldenummer: 03720207.4
(22) Anmeldetag: 19.03.2003
(51) Int. Cl.: H01M 2/00

(54) **MIKROSTRUKTURIERTE DIFFUSIONSSCHICHT IN GASDIFFUSIONSELEKTRODEN**
MICROSTRUCTURED DIFFUSION LAYER IN GAS DIFFUSION ELECTRODES
COUCHE DE DIFFUSION MICROSTRUCTUREE DANS DES ELECTRODES A DIFFUSION GAZEUSE

(30) Priorität: 26.04.2002 DE 10218857
(43) Veröffentlichungstag der Anmeldung: 26.01.2005
(73) Patentinhaber: Forschungszentrum Jülich GmbH, 52425 Jülich (DE)
(72) Erfinder: DOHLE, Hendrik, 52224 Stolberg (DE); GLÜSEN, Andreas, 40589 Düsseldorf (DE); MERGEL, Jürgen, 52428 Jülich (DE); SCHMITZ, Heinz, 52428 Jülich (DE); WIPPERMANN, Klaus, 52428 Jülich (DE)
(86) Internationale Anmeldenummer: PCT/DE2003/000902
(87) Internationale Veröffentlichungsnummer: WO 2003/092087

(56) Entgegenhaltungen:
- EP-A- 0 051 439
- DE-A- 2 626 829
- DE-A- 3 532 286
- DE-A- 19 502 622
- US-A1- 2001 031 389

## Beschreibung

Die Erfindung betrifft eine Diffusionsschicht für eine Gasdiffusionselektrode, die ein halogeniertes Polymer enthält und durch Poren gebildete Porenkanäle aufweist und sich durch einen verbesserten Stofftransport auszeichnet sowie diese enthaltende Schichtsysteme und Gasdiffusionselektroden. Die Erfindung betrifft ferner Verfahren zur Herstellung dieser Erzeugnisse.

Gasdiffusionselektroden sind aus dem Stand der Technik bekannt und finden Einsatz in Brennstoffzellen verschiedenster Art. Bekannte Gasdiffusionselektroden bestehen in der Regel aus mindestens einer nicht reaktiven Gasdiffusionsschicht und aus mindestens einer Katalysatorschicht. Bekannte Diffusionsschichten für Gasdiffusionselektroden enthalten neben Bindern und anderen Zusatzstoffen insbesondere Polytetrafluorethylen und Kohlenstoffpartikel. Bekannte Katalysatorschichten in Gasdiffusionselektroden enthalten katalytisch aktive Substanzen wie Pt-Mohr und/oder Kohlenstoffpartikel, die in ein inertes Gefüge von beispielsweise Polytetrafluorethylen eingebettet sind. Die Gasdiffusionsschicht weist durch Poren gebildete Porenkanäle auf, durch die in der Brennstoffzelle vorgesehenen Reaktanden zur Katalysatorschicht diffundieren können. Die in bekannten Gasdiffusionsschichten enthaltenen Porenkanäle weisen eine inhomogene Mikrostruktur auf, d.h. es liegt eine statistisch verteilte Ausrichtung der Porenkanäle in alle Richtungen vor.

Bekannte Gasdiffusionselektroden werden beispielsweise dadurch hergestellt, dass man Kohlenstoffpartikel und Polytetrafluorethylen (PTFE)-Dispersionen mischt und dem Gemisch Porenbildner zugibt. Die miteinander vermischten Bestandteile der späteren Diffusionsschicht werden dann auf eine Katalysatorschicht, meist ein Carbonvlies oder -gewebe aufgetragen und ausgehärtet. Durch die Zugabe des Porenbildners entstehen in der Diffusionsschicht Porenkanäle die einen späteren Stofftransport zu bzw. von der Katalysatorschicht ermöglichen.

Für den Einsatz in einer Brennstoffzelle benötigen Gasdiffusionselektroden eine große aktive Oberfläche, um Überspannungen und damit Spannungsverluste zu minimieren. Eine solche große Fläche entspricht prinzipiell einer ausgedehnten Dreiphasenzone im Elektrodeninneren. Hierfür ist eine hohe spezifische Oberfläche des eingesetzten Katalysatormaterials erforderlich. Weiterhin muss die gesamte Oberfläche des Katalysatormaterials elektrisch kontaktiert und mit Elektrolyt und Gas in Kontakt sein. Die Elektrode muss im Innern poröse Strukturen aufweisen, um eine ausreichende Gaszufuhr und Wasserabfuhr zu gewährleisten. In dieser porösen Struktur muss der Stofftransport zu bzw. von den Dreiphasenzonen möglichst ungehemmt ablaufen können. Bestandteile der Dreiphasenzone sind hierbei der Katalysator, der gleichzeitig Stromableiter sein kann, der Elektrolyt und die entsprechend der Art der Brennstoffzelle eingesetzten Medien.

Wie eingangs erwähnt, weisen die aus dem Stand der Technik bekannten Gasdiffusionselektroden bedingt durch ihr Herstellungsverfahren eine inhomogene Mikrostruktur auf. Dies hat zur Folge, dass die Porenkanäle teilweise an Stellen vorhanden sind, an denen überhaupt kein Katalysator vorhanden ist. Weiterhin kann es vorkommen, dass Katalysatorpartikel überhaupt keinen Kontakt zu Porenkanälen haben. Manche Katalysatorpartikel können aufgrund der inhomogenen Porenstruktur nur über hydrophile oder nur über hydrophobe Poren erreicht werden, so dass der Stofftransport nur über die flüssige Phase oder nur über die Gasphase stattfinden kann. Dies alles führt dazu, dass Teile der Elektrode nur in geringem Maße an der elektrochemischen Reaktion teilnehmen, da der Stofftransport nicht in ausreichendem Maße gewährleistet ist. Dadurch ist die im Mittel erreichbare flächenbezogene Stromdichte geringer und es wird eine größere Membran-Elektroden-Einheit benötigt, was zu zusätzlichen Kosten für Membran und Katalysator führt.

Nachteilig an den aus dem Stand der Technik bekannten Gasdiffusionsschichten ist daher ihre durch die inhomogene Mikrostruktur bedingte geringe Effizienz.

Der Erfindung lag somit die Aufgabe zugrunde, eine Diffusionsschicht für Gasdiffusionselektroden bereitzustellen, die einen verbesserten Stofftransport zu und von der Katalysatorschicht ermöglicht.

Diese Aufgabe wird erfindungsgemäß durch eine Diffusionsschicht gelöst, die ein halogeniertes Polymer enthält und durch Poren gebildete Porenkanäle aufweist, wobei die Mehrzahl der Porenkanäle gerichtet sind.

Gegenstand der Erfindung ist ferner ein Schichtsystem aus mindestens einer erfindungsgemäßen Diffusionsschicht und einer Katalysatorschicht.

Weiterhin ist Gegenstand der Erfindung eine Gasdiffusionselektrode die das erfindungsgemäße Schichtsystem enthält.

Die Erfindung umfaßt ferner die Verwendung der erfindungsgemäßen Gasdiffusionselektrode in einer Brennstoffzelle.

Gegenstand der Erfindung ist auch ein Verfahren zur Herstellung des erfindungsgemäßen Schichtsystems, wobei eine Masse enthaltend ein halogeniertes Polymer, Kohlenstoffpartikel und einen Porenbildner auf einen katalytischen Träger aufgebracht wird, der Porenbildner unter Gaserzeugung an den aktiven Zentren des katalytischen Trägers zur Reaktion gebracht wird, wobei das erzeugte Gas im wesentlichen orthogonal zur oberfläche des trägers durch die Masse entweicht, und die Masse anschließend ausgehärtet wird.

Ein weiterer Gegenstand der Erfindung ist ein Verfahren zur Herstellung der erfindungsgemäßen Diffusionsschicht wobei nach der Herstellung des erfindungsgemäßen Schichtsystems als weiterer Schritt das Entfernen des katalytischen Trägers von der ausgehärteten Masse durchgeführt wird.

Der Erfindung liegt der Gedanke zugrunde, dass eine Diffusionsschicht, die eine besondere Mikrostruktur aufweist, beim Einsatz in Gasdiffusionselektroden einen erheblich verbesserten Stofftransport zu und von der Katalysatorschicht ermöglicht. Die Mikrostruktur der erfindungsgemäßen Diffusionsschicht zeichnet sich dadurch aus, dass die Mehrzahl der in der Diffusionsschicht enthaltenen und durch Poren gebildeten Pörenkanäle derart gerichtet sind, dass sie in Verbindung mit einer Katalysatorschicht unmittelbar auf die aktiven Zentren der Katalysatorschicht weisen. Hierdurch wird ein verbesserter Stofftransport durch die Diffusionsschicht unmittelbar an die aktiven Zentren der Katalysatorschicht erzielt. Als besonders vorteilhaft hat sich erwiesen, wenn die Porenkanäle in der Diffusionsschicht im wesentlichen parallel zueinander angeordnet sind. Derartige gerichtete Mikrostrukturen waren bislang nicht bekannt. Die bisher bekannten Diffusionsschichten in Gasdiffusionselektroden enthalten vielmehr statistisch in alle Richtungen verlaufende Porenkanäle. Die besondere Mikrostruktur der erfindungsgemäßen Diffusionsschicht kann durch verschiedene, nachstehend beschriebene Herstellungsverfahren erzielt werden. Überraschend wurde ferner festgestellt, dass durch einen bestimmten Anteil von halogenisierten Polymeren in der Diffusionsschicht die Mikrostruktur entscheidend beeinflusst werden kann.

Überraschend wurde festgestellt, dass durch die veränderte Mikrostruktur der erfindungsgemäßen Schicht die Leistung einer Diffusionsschicht und einer Katalysatorschicht erheblich verbessert werden kann. Die optimale Gestaltung der durch Poren gebildeten Porenkanäle ermöglicht insbesondere einen verbesserten Transport von Stoffen in flüssiger als auch in gasförmiger Phase durch die erfindungsgemäße Diffusionsschicht. Dies führt zu einer starken Leistungszunahme der Gasdiffusionselektrode.

Wie eingangs erwähnt kann durch eine Einstellung des Gehalts an halogeniertem Polymer wie PTFE in den erfindungsgemäßen Diffusionsschichten eine feinteiligere Struktur der porösen Diffusionsschicht und eine daraus folgende starke Leistungszunahme der Gasdiffusionselektrode erzielt werden. Als besonders vorteilhaft hat sich erwiesen, wenn der Gehalt an halogenisierten Polymeren 13 bis 16 Ges.%, bezogen auf das Gewicht der Diffusionsschicht, beträgt. Die Einstellung des Gehalts an halogenisiertem Polymer hat den Vorteil, dass der hydrophobe Porenanteil und der Porenradius am Maximum der Porenradienverteilung stark zunehmen, während das Gesamtporenvolumen nur in geringem Maße abnimmt.

Die erfindungsgemäße Diffusionsschicht weist durch Poren gebildete Porenkanäle auf. Unter Poren im Sinne der Erfindung sind Hohlräume beliebiger Größe und Form zu verstehen, die beispielsweise mit Wasser oder Methanol gefüllt werden. Diese umfassen sowohl hydrophobe, als auch hydrophile Poren. Hydrophile Poren sind Poren, deren Porenwände überwiegend aus polarem Material bestehen (z. B. Nafion) und die somit als Diffusionsbarriere für Gase und Flüssigkeiten wirken können. Hydrophobe Poren sind Poren, deren Porenwände überwiegend aus unpolarem Material bestehen (z. B. Teflon) und die daher nicht mit Flüssigkeit gefüllt werden und einen schnellen Antransport von Gasen oder Flüssigkeiten gewährleisten.
Die Poren weisen vorzugsweise einen mittleren Durchmesser von 1 nm bis 1 µm, insbesondere von 10 nm bis 500 nm auf. Kleine Poren können einen Durchmesser von weniger als 100 nm aufweisen.

Wesentliches Merkmal der Erfindung ist, dass die Mehrzahl der in der Diffusionsschicht enthaltenen Porenkanäle gerichtet sind. Unter gerichteten Porenkanälen im Sinne der Erfindung sind solche Kanäle zu verstehen, die im Wesentlichen in dieselbe Richtung, insbesondere parallel zueinander verlaufen. Vorteilhaft ist insbesondere, wenn die Porenkanäle orthogonal zur Flachseite der Schicht verlaufen, damit ein Stofftransport durch die Kanäle direkt zu der über der Flachseite der Diffusionsschicht angeordneten Katalysatorschicht ermöglicht wird.

Die erfindungsgemäße Diffusionsschicht enthält ein halogeniertes Polymer. Erfindungsgemäß einsetzbare halogenierte Polymere können beliebige Polymere, insbesondere chemisch inerte Polymere sein. Besonders geeignet sind fluorierte Polymere, wie Polytetrafluorethylen (PTFE).

Die halogenierten Polymere können in beliebiger Menge in der Diffusionsschicht enthalten sein. Es hat sich jedoch als besonders vorteilhaft herausgestellt, wenn das halogenisierte Polymer PTFE in einer Menge von weniger als etwa 16 Gew.%, insbesondere 13 bis 16 Gew.%, bezogen auf das Gewicht der Diffusionsschicht, enthalten ist. Hierdurch bildet sich eine besondere vorteilhafte verfeinerte Mikrostruktur aus.

Es wurde nämlich gefunden, dass wenn man den kritischen Gehalt an halogeniertem Polymer von 16 Gew.% in der Diffusionsschicht unterschreitet, eine zusätzliche Verbesserung des Stofftransports eintritt. Die sprunghafte Leistungserhöhung findet in einem Bereich des Gehalts an halogeniertem Polymer von weniger als 3 Gew.% statt. Sie wird von einer ebenso unerwarteten Verfeinerung der Porenstruktur begleitet. Eine mögliche Begründung hierfür ist, dass die Strukturänderung auf eine Verkleinerung der Teilchen des halogenierten Polymers zurückzuführen ist, die oberhalb des kritischen Gehalts an halogeniertem Polymer zur Agglomeration neigen.

Ohne sich hierauf festzulegen, kann dies wie folgt erklärt werden:

Die Leistung einer Elektrode, beispielsweise einer DMFC-Anode, wird im wesentlichen durch die Hydrophobizität der Diffusionsschicht bestimmt. Da die hydrophilen Poren der Anodendiffusionsschicht mit Wasser oder Methanol gefüllt sein können, können diese als Diffusionsbarriere für gasförmiges Methanol und Kohlendioxid wirken. Die Diffusionsschicht sollte daher vorteilhafterweise einen genügenden Volumenanteil hydrophober, nicht mit Flüssigkeit gefüllter Poren enthalten, damit ein schneller Antransport von gasförmigen Methanol oder ein schneller Abtransport des Reaktionsproduktes Kohlendioxid gewährleistet ist. Ein schneller Stofftransport wiederum kann zu einer verbesserten Elektrodenleistung führen. Die DMFC-Anode besteht etwa zu einem Drittel des Porenvolumens der Diffusionsschicht aus kleinen Poren in der Kohlenstoffphase, die einen Durchmesser von weniger als 100 nm aufweisen. Um auch diese Poren hydrophobieren zu können, sollte ein Teil der halogeniertes Polymerpartikel eine Partikelgröße aufweisen, die vergleichbar oder kleiner als die angegebene Porengröße ist. Diese Hydrophobierung ist nur unterhalb des kritischen Gehaltes an halogeniertem Polymer gewährleistet. Dadurch, dass die halogenierten Polymere fein verteilt werden, können möglicherweise auch feine Poren im Bereich von 10 bis 100 nm Radius hydrophobiert werden. Das Unterschreiten des kritischen Gehalts an halogeniertem Polymer könnte zu einem sprunghaften Abfall der hydrophilen Porenanteile oder des Wasseranteils in der Diffusionsschicht führen. Beim Überschreiten des kritischen Gehalts an halogeniertem Polymer könnte eine ausreichende Hydrophobierung der Anodendiffusionsschicht erst wieder bei Anteilen von halogeniertem Polymer von mindestens 30 bis 40 Gew.% erreicht werden.

Die Erfindung ist jedoch nicht auf den Gehalt an halogeniertem Polymer in der Diffusionsschicht begrenzt, da bei gleicher Struktur höhere Gehalte an halogeniertem Polymer zu besserer Leistung führen können. Durch geeignete Lösungsmittelwahl und auch durch den Zusatz von Stabilisatoren können auch Schichten mit etwa 50 Gew.% oder mehr an halogeniertem Polymer in den erfindungsgemäßen Diffusionsschichten herstellbar sein.

Gemäß einer bevorzugten Ausführungsform der Erfindung weist die erfindungsgemäße Diffusionsschicht eine Porosität von wenigstens 50 %, insbesondere wenigstens 70 % auf. Unter Porosität der Diffusionsschicht im Sinne der Erfindung ist die Gesamtporosität der Diffusionsschicht zu verstehen. Besonders bevorzugt beträgt die Gesamtporosität der Diffusionsschicht wenigstens 50 %, insbesondere wenigstens 70 % und am meisten bevorzugt wenigstens 80 % des Schichtvolumens.

Gemäß einer weiteren bevorzugten Ausführungsform der Erfindung weist die erfindungsgemäße Diffusionsschicht einen Anteil von durch hydrophobe Poren gebildeten Porenkanälen von mindestens 50 Vol.% insbesondere mindestens 80 Vol.% des Gesamtporenvolumens auf. Besonders bevorzugt beträgt der Anteil der durch hydrophobe Poren gebildeten Porenkanäle am Gesamtvolumen mindestens 50 Vol.%, insbesondere wenigstens 75 Vol.% und am meisten bevorzugt 80 Vol.% des Schichtvolumens betragen.

Gemäß einer bevorzugten Ausführungsform der Erfindung enthält die erfindungsgemäße Diffusionsschicht Kohlepartikel. Besonders geeignet ist hierbei Aktivkohle, insbesondere Vulcan^{®} XC 72 Aktivkohle. Die Kohlepartikel können in der Diffusionsschicht in einer Menge von 0,2 bis 10 mg/cm², insbesondere von 1 bis 5 mg/cm² enthalten sein. Gegenstand der Erfindung sind ferner Schichtsysteme, die die erfindungsgemäße Diffusionsschicht enthalten und als weitere Schicht eine Katalysatorschicht enthalten.

Gemäß einer bevorzugten Ausführungsform ist im erfindungsgemäßen Schichtsystem die Katalysatorschicht im wesentlichen parallel zur Diffusionsschicht angeordnet. Vorteilhaft ist insbesondere, wenn die Porenkanäle orthogonal zur Ebene der Katalysatorschicht angeordnet sind, damit ein Stofftransport durch die Kanäle direkt von der Katalysatorschicht durch die Diffusionsschicht ermöglicht wird. Besonders vorteilhaft ist ferner, wenn die Mehrzahl der Porenkanäle auf die aktiven Zentren in der Katalysatorschicht gerichtet sind.

Unter den aktiven Zentren der Katalysatorschicht im Sinn der Erfindung sind diejenigen Stellen in oder auf der Katalysatorschicht zu verstehen, an denen Stoffe chemischkatalytisch umgesetzt werden können.

Unter Katalysatorschicht im Sinne der Erfindung sind beliebige Schichten, die in einem Trägermaterial verteilte Katalysatoren und/oder katalytisch aktive Flächen enthalten, zu verstehen. Besonders geeignete katalytisch aktive Flächen sind mit Platin beschichtete Edelstahlbleche.

Erfindungsgemäß einsetzbare Katalysatoren sind beispielsweise Katalysatoren, die aus Edelmetallen wie Platin oder Silber, Raney-Nickel, Wolframcarbid, Molybdänsulfiden, Wolframsulfiden, Aktivkohle, Phthalocyaninkomplexen und/oder Chelatkomplexen bestehen. Besonders geeignet ist Pt-Mohr als Katalysator.

Bei den in der Katalysatorschicht eingesetzten halogenierten Polymeren kann es sich um dieselben Polymere handeln, die zuvor für die Diffusionsschicht beschrieben wurden. Besonders bevorzugt ist PTFE.

Die Diffusionsschicht kann in beliebiger Dicke vorliegen. Es hat sich als besonders vorteilhaft herausgestellt, wenn die erfindungsgemäße Diffusionsschicht eine Dicke von 20 bis 300 µm aufweist.

Auch die Katalysatorschicht kann in beliebiger Dicke vorliegen. Besonders vorteilhaft ist es, wenn die Dicke der Katalysatorschicht 1 bis 50 µm beträgt.

Die erfindungsgemäßen Schichtsysteme können neben der Diffusionsschicht und der Katalysatorschicht weitere Schichten enthalten. Beispielsweise kann auf die Diffusionsschicht eine Stromableiterschicht aufgetragen werden. Vorzugsweise wird hierzu ein Gewebe aus Kohlefasern verwendet.

Die erfindungsgemäßen-Schichtsysteme können auf verschiedene Weisen hergestellt werden. Zur Herstellung kann beispielsweise eine Masse enthaltend ein halogeniertes Polymer, Kohlepartikel und Porenbildner auf einen katalytischen Träger aufgebracht werden. Der Porenbildner wandert zu den aktiven Zentren des katalytischen Trägers und wird dort zur Reaktion gebracht. Das erzeugte Gas strömt dann im wesentlichen orthogonal zur Oberfläche des katalytischen Trägers durch die Masse und bildet hierdurch gerichtete Porenkanäle. Die Masse kann anschließend ausgehärtet werden.

Katalytische Träger im Sinne der Erfindung sind beispielsweise katalytisch aktive Flächen oder Katalysatorschichten. Als Katalysatorschichten werden bevorzugt Pt-Mohr enthaltende Schichten eingesetzt. Als katalytisch aktive Flächen werden bevorzugt mit Platin beschichtete Edelstahlbleche verwendet.

Die bei der Herstellung des erfindungsgemäßen Schichtsystems eingesetzten Porenbildner sind beispielsweise Wasserstoffperoxid, Ammoniak und/oder Hydrazin. Die Porenbildner reagieren an den aktiven Zentren der Katalysatorschicht unter Freisetzung von Gasen, welche durch Entweichen aus dem Schichtsystem gerichtete Porenkanäle bilden.

Die erfindungsgemäß verwendeten Porenbildner können grundsätzlich in beliebiger Menge eingesetzt werden. Besonders bevorzugt werden die Porenbildner in einer Anfangskonzentration von 0,1 bis 0,5 M in der Masse eingesetzt. Insbesondere bei niedrigen Konzentrationen im Bereich von etwa 0,1 M ist es vorteilhaft, der Masse zusätzlich Lösungsmittel wie Isopropanol zuzugeben. Vorzugsweise werden die Lösungsmittel in einer Menge von etwa 5 Gew.% in die Masse eingebracht. Hierdurch wird eine verbesserte Streichfähigkeit der Masse erreicht.

Die Masse kann mit Hilfe dem Fachmann bekannter Techniken auf den katalytischen Träger aufgebracht werden. Vorzugsweise liegt die Masse in Form einer Paste vor. Sie wird vorzugsweise durch Rakeln auf den Träger aufgebracht.

Gemäß einer besonderen Ausführungsform kann vor dem Aushärten der Masse eine Stromableiterschicht aufgebracht werden. Vorzugsweise besteht die Stromableiterschicht aus einem Gewebe aus Kohlefasern.

Eine erfindungsgemäße Diffusionsschicht ohne zugehörige Katalysatorschicht kann nach dem zuvor beschriebenen Verfahren hergestellt werden, indem als katalytischer Träger beispielsweise ein mit Platin beschichtetes Edelstahlblech eingesetzt wird, welches nach erfolgter Porenbildung durch Gaserzeugung und anschließender Aushärtung des Schichtverbundes, beispielsweise durch Sintern, von der darauf ausgebildeten Diffusionsschicht abgelöst und entfernt wird.

Die Erfindung umfaßt ferner eine Gasdiffusionselektrode mit dem erfindungsgemäßen Schichtsystem. Diese kann beispielsweise in einer Brennstoffzelle eingesetzt werden. Brennstoffzellen sind an sich aus dem Stand der Technik bekannt. Sie werden in der Regel wach der Art des verwendeten Elektrolyten klassifiziert. Eine Brennstoffzelle, in der die erfindungsgemäße Gasdiffusionselektrode eingesetzt werden kann, ist beispielsweise eine Polymer Elektrolyt Membran-Brennstoffzelle (PEM), eine Festoxid-Brennstoffzelle (SOFC), eine alkalische Brennstoffzelle (AFC) oder eine Direkt-Methanol Brennstoffzelle (DMFC).

Die erfindungsgemäße Gasdiffusionselektrode ist insbesondere zum Einsatz in einer DMFC-Brennstoffzelle geeignet.

Eine Brennstoffzelle ist eine besondere Art eines galvanischen Elements, die elektrochemische Energie erzeugt, indem sie chemische Energie durch die Vereinigung eines Brennstoffs mit einem Oxidationsmittel direkt in elektrischen Strom umwandelt. Das Grundprinzip wird durch die räumliche Trennung der Reaktionspartner durch einen Elektrolyten, der einen Ionenaustausch ermöglicht, verwirklicht. Der Elektrolyt befindet sich zwischen zwei Elektroden (der Anode und der Kathode), die über einen äußeren Stromkreis miteinander verbunden sind. Die erfindungsgemäße Gasdiffusionselektrode kann beispielsweise als Anode eingesetzt wird.

Vorzugsweise enthält die Brennstoffzelle, in der die erfindungsgemäße Gasdiffusionselektrode verwendet wird, flüssige Kohlenwasserstoffbrennstoffe wie Methanol.
Beispielsweise wird in der DMFC-Brennstoffzelle flüssiges Methanol und Methanoldampf als Anodengas verwendet. Die DMFC wandelt das flüssige Methanol an dem Elektrolyten direkt in Protonen, freie Elektronen und Kohlendioxid (CO₂) um.

Nachstehend wird die Erfindung anhand von zwei Ausführungsbeispielen weiter erläutert.

### Beispiel 1

Eine Gasdiffusionselektrode wurde wie folgt hergestellt: Auf eine gasundurchlässige PTFE-Trägerfolie wurde eine Suspension aus 100 mg Pt-Mohr mit einer spezifischen Oberfläche von 20 m²/g in 0,2 ml Nafion-Lösung, 1 ml Isopropanol und 3 ml Wasser zur Ausbildung einer Katalysatorschicht aufgesprüht und bei 80°C im Trockenschrank getrocknet. Der Massenanteil des Nafions im trockenen Zustand, bezogen auf das Gewicht der Katalysatorschicht, lag anodenseitig bei 7 % und kathodenseitig bei 10 %.

Die so hergestellte Katalysatorschicht wurde anschließend mit einer protonenleitenden Membran aus Nation^{®} (DuPont) 5 Min. lang bei einer Temperatur von- 130°C und einem Druck von 0,5 kN/cm² verpresst.

Auf die Katalysatorschicht wurde anschließend eine viskose Masse aus 1000 mg Aktivkohle (Vulcano^{®} CX 72), 300 mg dispergiertem PTFE (TF 5032, Dyneon GmbH), 10 ml Wasser und 5 ml 0,5 M Wasserstoffperoxid aufgerakelt. Beim Aufrakeln entwickelten sich an den katalytisch aktiven Stellen der Katalysatorschicht Gase, wodurch Poren in der Masse gebildet wurden. Auf diese Weise wurde auf der Katalysatorschicht eine Diffusionsschicht ausgebildet.

Auf die aufgerakelte, noch feuchte Diffusionsschicht wurde anschließend ein Gewebe aus Kohlefasern als Stromableiter gelegt. Der so entstandene Schichtverbund wurde getrocknet.

Die so hergestellte GDE wurde als Anode in einer Brennstoffzelle vom Typ DMFC eingesetzt. Die Elektrode wies hervorragende Stromdichten und Stofftransporteigenschaften auf.

### Beispiel 2

Eine Diffusionsschicht zum Einsatz in einer GDE-Elektrode wurde wie folgt herstellt:
Eine viskose Masse aus 1000 mg Aktivkohle (Vulcan^{®} XC 72), 300 mg dispergiertem PTFE (TF 5032, Dyneon GmbH), 10 ml Wasser und 5 ml 0,5 M Wasserstoffperoxid wurden auf ein mit Platin beschichtetes Edelstahlblech aufgerakelt. Beim Aufrakeln der Masse entwickelten sich an den katalytisch aktiven Stellen des Edelstahlbleches Gase, wodurch Poren in der Masse ausgebildet wurden. Auf die aufgerakelte, noch feuchte Masse wurde anschließend ein Gewebe aus Kohlefasern als Stromableiter gelegt und die Masse 10 Min. lang angetrocknet. Anschließend wurde der Verbund 5 Min. lang bei 390°C an der Luft gesintert, wodurch die Masse zu einer Diffusionsschicht ausgehärtet wurde. Danach wurde das Edelstahlblech von der Diffusionsschicht entfernt.
Die so hergestellte Diffusionsschicht wies beim Einsatz in einer GDE-Elektrode hervorragende Massentransporteigenschaften und eine hohe elektrische Leitfähigkeit bei geringem Materialeinsatz auf.

## Patentansprüche

1. Diffusionsschicht für eine Gasdiffusionselektrode, die ein halogeniertes Polymer enthält und durch Poren gebildete Porenkanäle aufweist, **dadurch gekennzeichnet, dass** die Mehrzahl der Porenkanäle gerichtet sind.

2. Diffusionsschicht nach Anspruch 1, **dadurch gekennzeichnet, dass** die Mehrzahl der Porenkanäle in der Diffusionsschicht im Wesentlichen parallel zueinander angeordnet sind.

3. Diffusionsschicht nach Anspruch 1 oder 2, **dadurch gekennzeichnet, dass** die Mehrzahl der Porenkanäle im Wesentlichen orthogonal zur Flachseite der Schicht angeordnet sind.

4. Diffusionsschicht nach einem der Ansprüche 1 bis 3, **dadurch gekennzeichnet, dass** das halogenierte Polymer in einer Menge von 13 bis 16 Gew.%, bezogen auf das Gewicht der Diffusionsschicht, enthalten ist.

5. Diffusionsschicht nach einem der Ansprüche 1 bis 4, **dadurch gekennzeichnet, dass** das halogenierte Polymer ein fluoriertes Polymer, insbesondere Polytetrafluorethylen ist.

6. Diffusionsschicht nach einem der Ansprüche 1 bis 5, **dadurch gekennzeichnet, dass** die Porosität der Diffusionsschicht wenigstens 50 %, insbesondere wenigstens 75 % des Schichtvolumens beträgt.

7. Diffusionsschicht nach einem der Ansprüche 1 bis 6, **dadurch gekennzeichnet, dass** die Diffusionsschicht einen Anteil von durch hydrophobe Poren gebildete Porenkanäle von mindestens 50 %, insbesondere mindestens 80 % des Gesamtporenvolumens aufweist.

8. Diffusionsschicht nach einem der Ansprüche 1 bis 7, **dadurch gekennzeichnet, dass** die Diffusionsschicht Kohlepartikel enthält.

9. Schichtsystem umfassend mindestens eine Diffusionsschicht nach einem der Ansprüche 1 bis 8 und als weitere Schicht eine Katalysatorschicht.

10. Schichtsystem nach Anspruch 9, **dadurch gekennzeichnet, dass** die Katalysatorschicht parallel zur Diffusionsschicht angeordnet ist.

11. Schichtsystem nach Anspruch 9 oder 10, **dadurch gekennzeichnet, dass** die Mehrzahl der Porenkanäle in der Diffusionsschicht orthogonal zur Ebene der Katalysatorschicht angeordnet sind.

12. Schichtsystem nach einem der Ansprüche 9 bis 11, **dadurch gekennzeichnet, dass** die Mehrzahl der Porenkanäle auf die aktiven Zentren in der Katalysatorschicht gerichtet sind.

13. Schichtsystem nach einem der Ansprüche 9 bis 12, **dadurch gekennzeichnet, dass** die Katalysatorschicht Pt-Mohr als Katalysator enthält.

14. Schichtsystem nach einem der Ansprüche 9 bis 13, **dadurch gekennzeichnet, dass** die Katalysatorschicht ein halogeniertes Polymer enthält.

15. Schichtsystem nach Anspruch 14, **dadurch gekennzeichnet, dass** das halogenierte Polymer ein fluoriertes Polymer, insbesondere Polytetrafluorethylen ist.

16. Schichtsystem nach einem der Ansprüche 9 bis 15, **dadurch gekennzeichnet, dass** die Katalysatorschicht eine katalytisch aktive Fläche, insbesondere eine Platin enthaltende Fläche ist.

17. Schichtsystem nach einem der Ansprüche 9 bis 16, **dadurch gekennzeichnet, dass** die Diffusionsschicht eine Dicke von 20 bis 300 µm aufweist.

18. Schichtsystem nach einem der Ansprüche 9 bis 17, **dadurch gekennzeichnet, dass** die Katalysatorschicht eine Dicke von 1 bis 50 µm aufweist.

19. Schichtsystem nach einem der Ansprüche 9 bis 18, **dadurch gekennzeichnet, dass** als weitere Schicht eine Stromableiterschicht, insbesondere ein Gewebe aus Kohlefasern vorgesehen ist.

20. Gasdiffusionselektrode umfassend ein Schichtsystem nach einem der Ansprüche 9 bis 19.

21. Verwendung einer Gasdiffusionselektrode nach Anspruch 20 in einer Brennstoffzelle.

22. Verwendung nach Anspruch 21, **dadurch gekennzeichnet, dass** die Gasdiffusionselektrode als Anode eingesetzt wird.

23. Verwendung nach Anspruch 21 oder 22, **dadurch gekennzeichnet, dass** die Brennstoffzelle eine DMFC-Brennstoffzelle ist.

24. Verwendung nach einem der Ansprüche 21 bis 23, **dadurch gekennzeichnet, dass** die Brennstoffzelle flüssige Kohlenwasserstoffbrennstoffe, insbesondere Methanol enthält.

25. Verfahren zur Herstellung eines Schichtsystems nach einem der Ansprüche 9 bis 19, **dadurch gekennzeichnet, dass** eine Masse enthaltend ein halogeniertes Polymer, Kohlenstoffpartikel und einen Porenbildner auf einen katalytischen Träger aufgebracht wird, der Porenbildner unter Gaserzeugung an den aktiven Zentren des katalytischen Trägers zur Reaktion gebracht wird, wobei das erzeugte Gas im Wesentlichen orthogonal zur Oberfläche des Trägers durch die Masse entweicht, und die Masse anschließend ausgehärtet wird.

26. Verfahren zur Herstellung eines Schichtsystems nach Anspruch 25, **dadurch gekennzeichnet, dass** als katalytischer Träger eine katalytisch aktive Fläche, insbesondere ein mit Platin beschichtetes Edelstahlblech eingesetzt wird.

27. Verfahren zur Herstellung eines Schichtsystems nach Anspruch 25 oder 26, **dadurch gekennzeichnet, dass** als katalytischer Träger eine Katalysatorschicht, insbesondere eine Pt-Mohr enthaltende Schicht eingesetzt wird.

28. Verfahren zur Herstellung eines Schichtsystems nach einem der Ansprüche 25 bis 27, **dadurch gekennzeichnet, dass** die Menge des halogenierten Polymers in der Masse 13 bis 16 Gew.% beträgt.

29. Verfahren zur Herstellung eines Schichtsystems nach einem der Ansprüche 25 bis 28, **dadurch gekennzeichnet, dass** als halogeniertes Polymer ein fluoriertes Polymer, insbesondere ein Polytetrafluorethylen eingesetzt wird.

30. Verfahren zur Herstellung eines Schichtsystems nach einem der Ansprüche 25 bis 29, **dadurch gekennzeichnet, dass** als Kohlepartikel Aktivkohle eingesetzt wird.

31. Verfahren zur Herstellung eines Schichtsystems nach einem der Ansprüche 25 bis 30, **dadurch gekennzeichnet, dass** als Porenbildner Wasserstoffperoxid und/oder Hydrazin eingesetzt wird.

32. Verfahren zur Herstellung eines Schichtsystems nach einem der Ansprüche 25 bis 31, **dadurch gekennzeichnet, dass** der Porenbildner in der Masse in einer Anfangskonzentration von 0,1 bis 0,5 M enthalten ist.

33. Verfahren zur Herstellung eines Schichtsystems nach einem der Ansprüche 25 bis 32, **dadurch gekennzeichnet, dass** die Masse durch Rakeln auf den katalytischen Träger aufgebracht wird.

34. Verfahren zur Herstellung eines Schichtsystems nach einem der Ansprüche 25 bis 33, **dadurch gekennzeichnet, dass** vor dem Aushärten der Masse eine Stromableiterschicht, insbesondere ein Gewebe aus Kohlefasern, aufgebracht wird.

35. Verfahren zur Herstellung einer Diffusionsschicht nach einem der Ansprüche 1 bis 8 durch ein Verfahren nach einem der Ansprüche 25 bis 34 umfassend als weiteren Schritt das Entfernen des katalytischen Trägers von der ausgehärteten Masse.

## Claims

1. Diffusion layer, in a gas diffusion electrode, that contains a halogenated polymer and has a pore channel formed by pores, **characterized in that** most of the pore channels are poled.

2. Diffusion layer in accordance with claim 1, **characterized in that** most of the pore channels in the diffusion layer are disposed essentially parallel to each other.

3. Diffusion layer in accordance with claims 1 or 2, **characterized in that** most of the pore channels are disposed essentially at right-angles to the flat side of the layer.

4. Diffusion layer in accordance with one of claims 1 to 3, **characterized in that** the diffusion layer is 13 to 16% halogenated polymer, by weight.

5. Diffusion layer in accordance with one of claims 1 to 4, **characterized in that** the halogenated polymer is a fluorinated polymer, particularly polytetrafluoroethylene (PTFE).

6. Diffusion layer in accordance with one of claims 1 to 5, **characterized in that** the level of porosity of the diffusion layer is at least 50%, particularly at least 75% of the layer volume.

7. Diffusion layer in accordance with one of claims 1 to 6, **characterized in that** the diffusion layer has a portion of at least 50% pore channels that are formed by hydrophobic pores, particularly at least 80% of the total pore volume.

8. Diffusion layer in accordance with one of claims 1 to 7, **characterized in that** the diffusion layer contains carbon particles.

9. Layer system comprising at least one diffusion layer in accordance with one of claims 1 to 8 and, as a further layer, a catalyst bed.

10. Layer system in accordance with claim 9, **characterized in that** the catalyst bed is disposed parallel to the diffusion layer.

11. Layer system in accordance with claim 9 or 10, **characterized in that** most of the pore channels in the diffusion layer are disposed at right-angles to the plane of the catalyst bed.

12. Layer system in accordance with one of claims 9 to 11, **characterized in that** most of the pore channels are directed towards the active centres in the catalyst bed.

13. Layer system in accordance with one of claims 9 to 12, **characterized in that** the catalyst bed contains Pt (Mohr) as a catalyst.

14. Layer system in accordance with one of claims 9 to 13, **characterized in that** the catalyst bed contains a halogenated polymer.

15. Layer system in accordance with claim 14, **characterized in that** the halogenated polymer is a fluorinated polymer, particularly PTFE.

16. Layer system in accordance with one of claims 9 to 15, **characterized in that** the catalyst bed is a catalytically active layer, particularly a surface containing platinum.

17. Layer system in accordance with one of claims 9 to 16, **characterized in that** the diffusion layer is 20 to 300 µm thick.

18. Layer system in accordance with one of claims 9 to 17, **characterized in that** the catalyst bed is 1 to 50 µm thick.

19. Layer system in accordance with one of claims 9 to 18, **characterized in that**, as a further layer, there is an electrically conductive layer, particularly a fabric made of carbon fibres.

20. Gas diffusion electrode comprising a layer system in accordance with one of claims 9 to 19.

21. Use of a gas diffusion electrode in accordance with claim 20, in a fuel cell.

22. Application in accordance with claim 21, **characterized in that** the gas diffusion electrode is used as an anode.

23. Use in accordance with claim 21 or 22, **characterized in that** the fuel cell is a DMFC fuel cell.

24. Use in accordance with one of claims 21 to 23, **characterized in that** the fuel cell contains liquid hydrocarbon fuels, particularly methanol.

25. Process for producing a layer system in accordance with one of claims 9 to 19, **characterized in that** a compound containing a halogenated polymer, carbon particles and a pore-forming material are attached to a catalytic support, and **in that** the pore-forming material is attached, with the production of gas, to the active centres of the catalytic support, to produce a reaction, whereby the gas produced escapes, through the compound, essentially at right-angles to the surface of the support, and **in that** the compound is then hardened.

26. Process for producing a layer system in accordance with claim 25, **characterized in that** a catalytically active surface, particularly a platinum-coat stainless steel sheet is used as a catalytic support.

27. Process for producing a layer system in accordance with claim 25 or 26, **characterized in that** a catalyst bed, particularly a layer containing Pt (Mohr), is used as a catalytic support.

28. Process for producing a layer system in accordance with one of claims 25 to 27, **characterized in that** the quantity of halogenated polymer in the compound 13 is up to 16% of weight.

29. Process for producing a layer system in accordance with claims 25 to 28, **characterized in that** a fluorinated polymer, in particular a PTFE, is used as a halogenated polymer.

30. Process for producing a layer system in accordance with one of claims 25 to 29, **characterized in that** activated carbon is used as carbon particles.

31. Process for producing a layer system in accordance with one of claims 25 to 30, **characterized in that** hydrogen peroxide and/or hydrazine is used as a pore-forming material.

32. Process for producing a layer system in accordance with one of claims 25 to 31, **characterized in that** the pore-forming material is contained in the compound at an initial concentration of 0.1 to 0.5 M.

33. Process for producing a layer system in accordance with one of claims 25 to 32, **characterized in that** the compound is attached to the catalytic support by means of blades.

34. Process for producing a layer system in accordance with one of claims 25 to 33, **characterized in that**, before the hardening of the compound, an electrically conductive layer, particularly a carbon fibre fabric, is attached.

35. Process for producing a diffusion layer system in accordance with one of claims 1 to 8 by means of a process in accordance with one of claims 25 to 34 including, as a further stage, the removal of the catalytic support from the hardened compound.

## Revendications

1. Couche de diffusion pour une électrode à diffusion gazeuse, qui contient un polymère halogéné et présente des canaux formés par des pores, **caractérisée en ce que** la majorité de canaux de pores sont directionnels.

2. Couche de diffusion selon la revendication 1, **caractérisée en ce que** la majorité de canaux de pores est disposée sensiblement parallèlement entre eux dans la couche de diffusion.

3. Couche de diffusion selon la revendication 1 ou la revendication 2, **caractérisée en ce que** la majorité de canaux de pores est disposée sensiblement orthogonalement à la surface plane de la couche.

4. Couche de diffusion selon l'une des revendications 1 à 3, **caractérisée en ce que** le polymère halogéné est contenu dans une teneur comprise entre 13 et 16 % en poids, par rapport au poids de la couche de diffusion.

5. Couche de diffusion selon l'une des revendications 1 à 4, **caractérisée en ce que** le polymère halogéné est un polymère fluoré, en particulier du polytétrafluoroéthylène.

6. Couche de diffusion selon l'une des revendications 1 à 5, **caractérisée en ce que** la porosité de la couche de diffusion s'élève à au moins 50 %, en particulier au moins 75 % du volume de la couche.

7. Couche de diffusion selon l'une des revendications 1 à 6, **caractérisée en ce que** la couche de diffusion présente une proportion de canaux de pores formés par des pores hydrophobes s'élevant à au moins 50 %, en particulier au moins 80 % du volume poreux global.

8. Couche de diffusion selon l'une des revendications 1 à 7, **caractérisée en ce que** la couche de diffusion contient des particules de charbon.

9. Système de couches comprenant au moins une couche de diffusion selon l'une des revendications 1 à 8, et une couche de catalyseur comme autre couche.

10. Système de couches selon la revendication 9,
**caractérisé en ce que** la couche de catalyseur est disposée parallèlement à la couche de diffusion.

11. Système de couches selon la revendication 9 ou la revendication 10, **caractérisé en ce que** la majorité de canaux de pores de la couche de diffusion est disposée orthogonalement au plan de la couche de catalyseur.

12. Système de couches selon l'une des revendications 9 à 11, **caractérisé en ce que** la majorité de canaux de pores est dirigée vers les centres actifs de la couche de catalyseur.

13. Système de couches selon l'une des revendications 9 à 12, **caractérisé en ce que** la couche de catalyseur contient du noir de platine comme catalyseur.

14. Système de couches selon l'une des revendications 9 à 13, **caractérisé en ce que** la couche de catalyseur contient un polymère halogéné.

15. Système de couches selon la revendication 14, **caractérisé en ce que** le polymère halogéné est un polymère fluoré, en particulier du polytétrafluoroéthylène.

16. Système de couches selon l'une des revendications 9 à 15, **caractérisé en ce que** la couche de catalyseur est une surface catalytiquement active, en particulier une surface contenant du platine.

17. Système de couches selon l'une des revendications 9 à 16, **caractérisé en ce que** la couche de diffusion présente une épaisseur comprise entre 20 et 300 µm.

18. Système de couches selon l'une des revendications 9 à 17, **caractérisé en ce que** la couche de catalyseur présente une épaisseur comprise entre 1 et 50 µm.

19. Système de couches selon l'une des revendications 9 à 18, **caractérisé en ce qu'**une couche de dérivation de courant, en particulier un tissu de fibres de charbon, est prévue comme autre couche.

20. Electrode à diffusion gazeuse comprenant un système de couches selon l'une des revendications 9 à 19.

21. Utilisation d'une électrode à diffusion gazeuse selon la revendication 20 dans une pile à combustible.

22. Utilisation selon la revendication 21, **caractérisée en ce que** l'électrode à diffusion gazeuse est mise en oeuvre en tant qu'anode.

23. Utilisation selon la revendication 21 ou la revendication 22, **caractérisée en ce que** la pile à combustible est une pile à combustible DMFC.

24. Utilisation selon l'une des revendications 21 à 23, **caractérisée en ce que** la pile à combustible contient des combustibles hydrocarbures liquides, en particulier du méthanol.

25. Procédé de fabrication d'un système de couches selon l'une des revendications 9 à 19, **caractérisé en ce qu'**une masse contenant un polymère halogéné, des particules de carbone et un agent porogène est appliquée sur un support catalytique, **en ce que** l'agent porogène est amené à réagir par génération de gaz contre les centres actifs du support catalytique, le gaz généré s'émanant au travers de la masse sensiblement orthogonalement à la surface du support, et **en ce que** la masse est consécutivement durcie.

26. Procédé de fabrication d'un système de couches selon la revendication 25, **caractérisé en ce qu'**une surface catalytiquement active, en particulier une tôle d'acier inoxydable revêtue de platine, est mise en oeuvre en tant que support catalytique.

27. Procédé de fabrication d'un système de couches selon la revendication 25 ou la revendication 26, **caractérisé en ce qu'**une couche de catalyseur, en particulier une couche contenant du noir de platine, est mise en oeuvre en tant que support catalytique.

28. Procédé de fabrication d'un système de couches selon l'une des revendications 25 à 27, **caractérisé en ce que** la teneur du polymère halogéné dans la masse est comprise entre 13 et 16 % en poids.

29. Procédé de fabrication d'un système de couches selon l'une des revendications 25 à 28, **caractérisé en ce qu'**un polymère fluoré, en particulier un polytétrafluoroéthylène, est mis en oeuvre en tant que polymère halogéné.

30. Procédé de fabrication d'un système de couches selon l'une des revendications 25 à 29, **caractérisé en ce que** du charbon actif est mis en oeuvre en tant que particules de charbon.

31. Procédé de fabrication d'un système de couches selon l'une des revendications 25 à 30, **caractérisé en ce que** du peroxyde d'hydrogène et / ou de l'hydrazine sont mis en oeuvre en tant qu'agent porogène.

32. Procédé de fabrication d'un système de couches selon l'une des revendications 25 à 31, **caractérisé en ce que** l'agent porogène est contenu dans la masse dans une concentration initiale de 0,1 à 0,5 M.

33. Procédé de fabrication d'un système de couches selon l'une des revendications 25 à 32, **caractérisé en ce que** la masse est appliquée par raclage sur le support catalytique.

34. Procédé de fabrication d'un système de couches selon l'une des revendications 25 à 33, **caractérisé en ce qu'**une couche de dérivation de courant, en particulier un tissu de fibres de charbon, est appliquée avant durcissement de la masse.

35. Procédé de fabrication d'une couche de diffusion selon l'une des revendications 1 à 8 par un procédé selon l'une des revendications 25 à 34, comprenant comme autre étape le retrait du support catalytique de la masse durcie.
